# FASCICULE DE BREVET EUROPEEN

(11) **EP 2 836 727 B1**
(45) Date de publication et mention de la délivrance du brevet: **11.01.2017**
(21) Numéro de dépôt: 13717016.3
(22) Date de dépôt: 12.04.2013
(51) Int. Cl.: F16B 31/04, F16B 35/06, F16C 17/02, F16C 17/14, F16C 32/06, F16C 33/04, F04D 29/047, F16C 35/02, F03B 11/06, F04D 29/057, F04D 29/056, F16C 43/02

(54) **FRETTE POUR PALIER HYDROSTATIQUE OU HYDRODYNAMIQUE, PROCÉDÉ DE MONTAGE D'UNE TELLE FRETTE SUR UN ARBRE, ENSEMBLE FORMÉ D'UNE TELLE FRETTE ET D'UN ARBRE**
RING FÜR EIN HYDROSTATISCHES ODER HYDRODYNAMISCHES LAGER, VERFAHREN ZUR MONTAGE SOLCH EINES RINGS SOWIE AUS SOLCH EINEM RING UND EINER WELLE GEBILDETE BAUGRUPPE
HOOP FOR A HYDROSTATIC OR HYDRODYNAMIC BEARING, METHOD FOR MOUNTING SUCH A HOOP ON A SHAFT, AND ASSEMBLY FORMED BY SUCH A HOOP AND A SHAFT

(30) Priorité: 13.04.2012 FR 1253442
(43) Date de publication de la demande: 18.02.2015
(73) Titulaire: ALSTOM Renewable Technologies, 38100 Grenoble (FR)
(72) Inventeur: CHABERT, Lucas, F-38170 Seyssinet-Pariset (FR)
(74) Mandataire: Brannen, Joseph Waclaw
(86) Numéro de dépôt international: PCT/EP2013/057663
(87) Numéro de publication internationale: WO 2013/153194

(56) Documents cités:
- FR-A1- 2 341 067
- FR-A1- 2 768 661
- JP-A- 7 083 231
- US-A- 2 380 715
- US-A- 4 892 419
- US-A- 5 839 880
- US-A1- 2010 166 578

## Description

L'invention est relative à une frette destinée à être montée sur un arbre d'une machine tournante pour former une surface intérieure d'un palier hydrostatique ou hydrodynamique.

Le document JP-H-0783231 divulgue une frette pour un palier à eau comportant un cylindre et une bague, qui sont respectivement composés de plusieurs segments afin de faciliter les opérations de montage du palier.

Les avantages des paliers à eau par rapport aux paliers à huile sont connus, notamment en terme de pollution. En effet, le fonctionnement et la maintenance d'un palier à huile entraine inévitablement un relâchement dans l'environnement d'une fraction de l'huile utilisée.

Cependant, la fabrication d'un palier à eau est particulièrement contraignante. Le jeu radial entre les surfaces intérieure et extérieure du palier est réduit, de l'ordre de 0,1 millimètre, ce qui impose, en particulier, que la surface intérieure du palier soit usinée avec une tolérance inférieure ou égale à 5 centièmes de millimètre, de préférence de 3 centièmes de millimètre. Les meilleurs outils actuellement disponibles permettent d'obtenir une telle précision d'usinage.

Par ailleurs, il existe un besoin pour mettre à niveau les machines existantes en substituant leurs paliers à huile par des paliers à eau.

Actuellement, cette mise à niveau consiste à rectifier la surface de l'arbre formant la surface intérieure du palier pour passer de la tolérance requise pour un palier à huile (typiquement de 50 centièmes de millimètre) à celle requise pour un palier à eau (typiquement de 5 centièmes de millimètre). Pour cela, il s'agit de démonter l'arbre de la machine pour le transporter depuis le site d'exploitation de la machine, vers un atelier afin de rectifier la surface avec l'outil adapté. Puis, une fois rectifié, l'arbre est transporté de l'usine, vers le site d'exploitation, avant d'être remonté et que la machine puisse reprendre son fonctionnement.

En plus des risques liés au transport de l'arbre, et les problèmes liés au montage et au remontage de l'arbre, le temps pendant lequel la machine n'est pas exploitée est particulièrement long (de l'ordre de plusieurs mois). Ceci représente un coût élevé pour l'exploitant qui l'empêche souvent de procéder à une telle mise à niveau.

Pour réduire le temps mort d'exploitation, le document FR-A-2938616 propose une frette destinée à être monté sur l'arbre, de préférence in situ, la surface radiale extérieure de la frette constituant la surface intérieure du palier.

Cependant, les contraintes mécaniques résultant du serrage d'une telle frette ont pour effet de déformer la géométrie de la surface extérieure de la frette, de sorte que la tolérance d'usinage de la surface extérieure de la frette obtenue en atelier est perdue. De plus, puisque la surface de l'arbre est usinée à la tolérance requise pour un palier à huile, après serrage de la frette sur la surface de l'arbre, la tolérance de la surface extérieure de la frette montée correspond à la tolérance de la surface de l'arbre, c'est-à-dire au 50 centièmes de millimètre.

L'invention a donc pour but de résoudre le problème précité en proposant notamment une frette suivant la revendication 1 et un procédé de montage selon la revendication 12 de cette frette qui permettent de conserver la tolérance d'usinage de la surface extérieure de la frette.

Selon des aspects avantageux mais non obligatoires de l'invention, une frette telle que mentionnée ci-dessus peut incorporer une ou plusieurs des caractéristiques suivantes, prises dans toutes les combinaisons techniquement possibles :
- le cylindre est composé d'une première pièce et d'une seconde pièce, chaque pièce étant semi-circulaire.
- une surface extérieure du cylindre comporte un collet annulaire s'étendant radialement vers l'extérieur, et la bague comporte une rainure annulaire constituant un logement ajusté au collet pour la réception de celui-ci lors de la fixation de la bague sur le cylindre.
- le collet comporte une pluralité de canaux axiaux traversants et la bague comporte une pluralité de canaux axiaux connectant une face transversale et la rainure de la bague, lesdits moyens de fixation comportant une pluralité de pions coniques, chaque pion étant adapté pour être inséré dans un passage formé de l'alignement d'un canal axial de la bague avec un canal axial du collet du cylindre.

- la surface extérieure de la bague est constituée, au moins partiellement selon la direction axiale, par une couche en un matériau céramique.
- la bague est composée d'un premier élément et d'un second élément, chaque élément étant semi-circulaire.
- un collier monté serré sur l'arbre et solidarisé à une face transversale du cylindre par des moyens de solidarisation, de préférence constitués par une pluralité de pions étagés.
- les moyens de fixation comportent, en outre, une pluralité de vis radiales, chaque vis étant insérée dans un orifice orienté radialement ménagé sur un bord de la bague et vissée dans un alésage fileté orienté radialement et ménagé dans le cylindre.
- la tolérance d'usinage de la surface extérieure de la bague est de 5 centièmes de millimètre, de préférence de 4 centièmes de millimètre, de préférence encore de 3 centièmes de millimètre.

L'invention a également pour objet un ensemble constitué par un arbre et une frette, caractérisé en ce que la frette est conforme à la frette précédente, la frette étant solidarisée à l'arbre par une couche de calage réalisée en un matériau de calage adapté et situé dans un intervalle entre l'arbre et le cylindre.

Selon des aspects avantageux mais non obligatoires de l'invention, l'ensemble tel que mentionné ci-dessus peut incorporer une ou plusieurs des caractéristiques suivantes, prises dans toutes les combinaisons techniquement possibles :
- le matériau de calage est une résine fluide et sans retrait, de préférence une résine époxy.

L'invention a également pour objet un procédé de montage d'une frette conforme à la frette précédente sur un arbre d'une machine tournante pour former une surface intérieure d'un palier hydrostatique ou hydrodynamique, caractérisé en ce qu'il comporte les étapes consistant à :
- monter le cylindre de la frette autour de l'arbre en assemblant les différentes pièces constitutives du cylindre ;
- solidariser le cylindre à l'arbre en réalisant une couche de calage entre le cylindre et l'arbre ;
- monter la bague sur le cylindre en fixant les différents éléments constitutifs de la bague sur le cylindre.

Selon des aspects avantageux mais non obligatoires de l'invention, le procédé peut incorporer une ou plusieurs des caractéristiques suivantes, prises dans toutes les combinaisons techniquement possibles :
- l'étape de montage du cylindre est suivie d'une étape de réglage consistant à équilibrer l'ensemble formé de l'arbre et du cylindre.
- l'étape de solidarisation consiste à injecter une résine fluide et sans retrait dans un intervalle entre le cylindre et l'arbre et d'attendre le séchage de la résine.

L'invention sera mieux comprise et d'autres avantages de celle-ci apparaitront plus clairement à la lumière de la description qui va suivre d'un mode de réalisation particulier d'une frette, d'un ensemble et d'un procédé conformes à l'invention, donnée uniquement à titre illustratif et faite en se référant aux dessins annexés dans lesquels :
- la figure 1 est une vue d'ensemble de la machine tournante intégrant la frette selon l'invention montée sur un arbre ;
- la figure 2 est une représentation éclatée de la frette selon l'invention ;
- la figure 3 est une coupe dans un plan axial de l'ensemble constitué de la frette et de l'arbre ;
- la figure 4 est une coupe transversale de l'ensemble constitué de la frette et de l'arbre ; et,

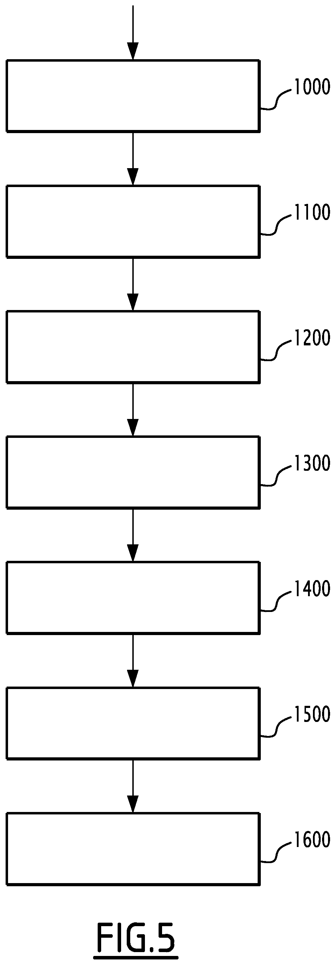

- la figure 5 est une représentation sous forme de schéma bloc du procédé de montage de la frette sur l'arbre.

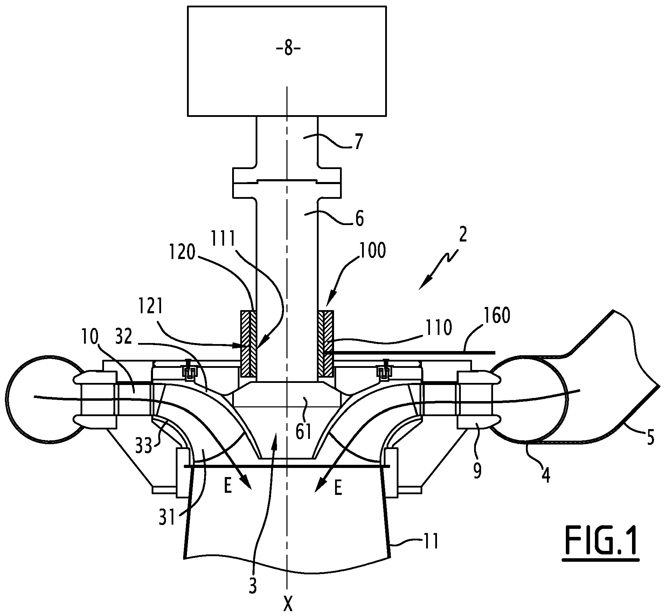

L'installation 1, représentée à la figure 1, comprend une turbine Francis 2 dont la roue 3 est alimentée à partir d'une bâche 4 dans laquelle débouche une conduite forcée 5.

La turbine 2 comprend également un arbre 6 sur lequel est montée la roue 3 et qui tourne avec elle autour d'un axe X₆, qui dans le présent mode de réalisation, est vertical, cet axe étant également un axe longitudinal de l'arbre 6. L'arbre 6 est solidaire en rotation d'un autre arbre 7 formant un organe d'entraînement d'un alternateur 8.

Entre la bâche 4 et la roue 3 est disposée une série d'avant-directrices 9 et de directrices 10 dont la fonction est de guider un écoulement E provenant de la conduite 5 et de la bâche 4 et destiné à traverser la roue 3 en direction d'un conduit d'aspiration 11.

La roue 3 comprend des aubes 31 qui s'étendent entre un plafond 32 et une ceinture 33.

La roue 3 est fixée sur l'extrémité inférieure 61 de l'arbre 6 parfois dénommée « pied d'arbre ». Le pied d'arbre 61 peut être monobloc avec le reste de l'arbre 6 ou rapporté sur celui-ci. Le montage de la roue 3 sur le pied d'arbre 61 a lieu par des moyens connus en soi, tels que des vis non représentées.

Un palier hydrostatique 100 est formé autour de l'arbre 6, au-dessus du pied d'arbre 61, afin de reprendre les efforts subis par l'arbre 6 au cours de rotation des parties mobiles 3 et 6 de la turbine 2 autour de l'axe X₆.

En variante, le palier 100 peut être un palier hydrodynamique.

Ce palier 100 est défini entre une garniture fixe 110 et une frette 120 solidaire de l'arbre 6. La garniture 110 est fixe en ce sens qu'elle ne tourne pas autour de l'axe X₆ lorsque la roue 3 et l'arbre 6 tournent. La garniture 110 est donc immobile par rapport à la structure de la turbine 2 qui comprend, notamment, les éléments 4 et 5.

Le palier 100 est délimité entre la surface radiale intérieure 111 de la garniture 110 et la surface radiale extérieure 121 de la frette 120, ces surfaces étant toutes deux cylindriques, circulaires et centrées sur l'axe X₆ en configuration montée de la turbine 2.

Une ligne d'alimentation 160 permet d'alimenter en eau claire sous pression l'interstice correspondant au palier 100 entre les surfaces 111 et 121, à travers la garniture 110.

Compte tenu du mouvement de rotation entre la surface 121 et la surface 111, il importe que la surface 121 soit le plus possible continue et dépourvue d'aspérités ou d'irrégularités.

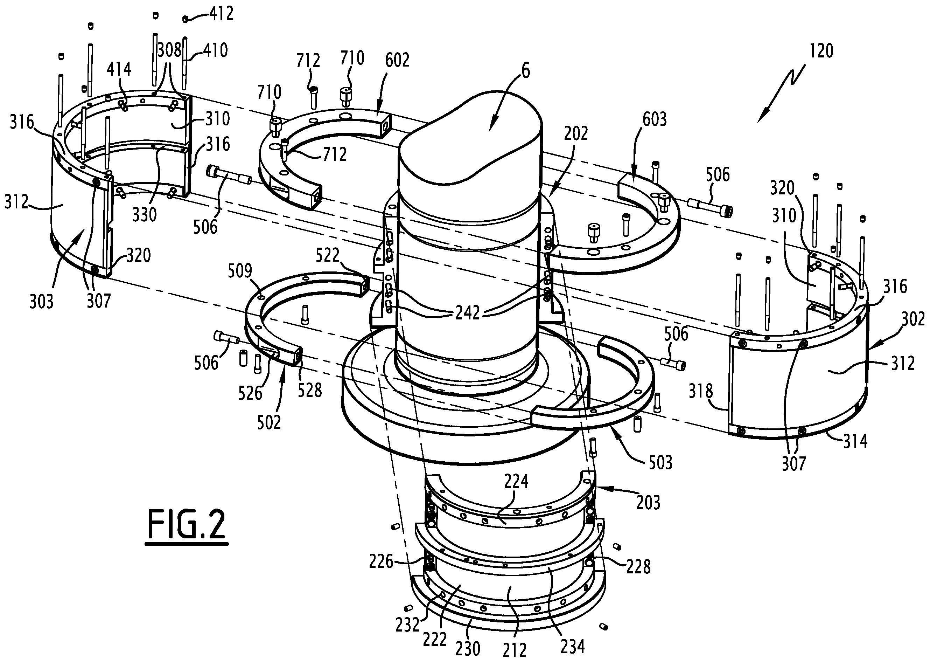

La structure de la frette 120 ressort des figures 2 à 4.

La frette 120 est composite. Elle comporte un cylindre 200, situé radialement du côté intérieur de la frette 120 et entourant l'arbre 6, une bague 300, située radialement du côté extérieur de la frette 120 et entourant le cylindre 200, des moyens de fixation de la bague 300 sur le cylindre 200, et, de part et d'autre du cylindre 200, des colliers inférieurs 500 et supérieur 600 ainsi que des moyens de solidarisation des colliers 500 et 600 sur le cylindre 200.

Le cylindre 200, dans le but de pouvoir être monté autour de l'arbre 6, est composé d'une première pièce 202 et d'une seconde pièce 203. Les pièces 202 et 203 sont identiques entre elles et assemblées l'une à l'autre par des moyens d'assemblage.

La pièce 202 est semi-circulaire. Elle présente une surface intérieure 210 radiale, une surface extérieure 212, des faces transversales inférieure 214 et supérieure 216 planes et qui relient les surfaces 210 et 212 selon un plan transversal à l'axe X₆, et des première et seconde tranches 218 et 220 planes et qui relient les surfaces 210 et 212 selon un plan axial contenant l'axe X₆.

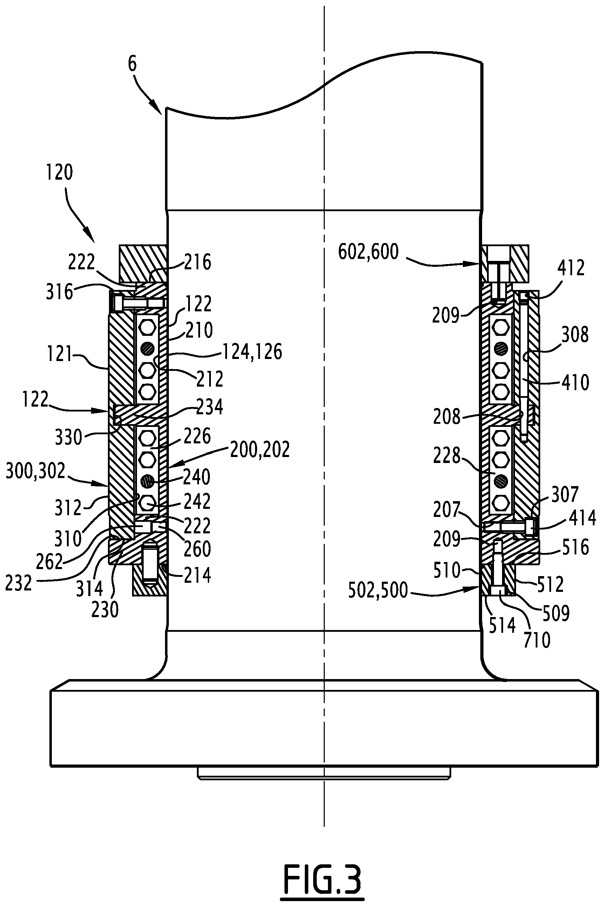

Le contour de la surface extérieure 212 de la pièce 202 présente des rebords faisant saillie radialement vers l'extérieur : des rebords inférieur 222 et supérieur 224 annulaires et des premier et second rebords 226 et 228 rectilignes (figure 3).

Le rebord annulaire inférieur 222 porte une collerette 230 annulaire faisant saillie radialement vers l'extérieur, de manière à former avec le rebord 222 un épaulement 232 de support de la bague 300.

La première tranche 218, respectivement la seconde tranche 220, est formée sur le premier rebord 226, le second rebord 228, tandis que la face transversale inférieure 214, respectivement la face transversale supérieure 216, est formée sur la collerette 230, le rebord supérieur 221.

A mi-hauteur, la surface extérieure 212 comporte un collet 234 faisant saillie radialement vers l'extérieur. Il s'étend radialement au-delà des rebords 222 à 224, sans dépasser la collerette 230.

De la même façon, la seconde pièce 203 est définie entre une surface intérieure 211 radiale, une surface extérieure 213, des faces transversales inférieure 215 et supérieure 217, et des première et seconde tranches 219 et 221 (figure 2). La surface extérieure 213 comporte des rebords inférieur 223 et supérieur 225 annulaires et des premier et second rebords 227 et 229 rectilignes. La surface extérieure 213 comporte 2 également une collerette 231 et un collet 235.

En position assemblée des deux pièces 202 et 203, la première tranche 218 de la première pièce 202 est en appui sur la seconde tranche 221 de la seconde pièce 203, tandis que la seconde tranche 220 de la première pièce 202 est en appui sur la première tranche 219 de la seconde pièce 203.

Chaque rebord rectiligne 226 à 229 comporte une pluralité de perçages 240 traversants, débouchant orthogonalement sur sa tranche. Chaque perçage de la première tranche d'une pièce est aligné avec un perçage correspondant de la seconde tranche de l'autre pièce.

Les première et seconde pièces 202 et 203 sont assemblées l'une à l'autre par des boulons 242. Chaque boulon est inséré dans le perçage d'une pièce et le perçage correspond de l'autre pièce, puis vissé pour appliquer les rebords rectilignes placés en vis-à-vis deux à deux, les uns contre les autres.

De tels moyens d'assemblage permettent d'associer les deux pièces 202 et 203 sans déformation de leur géométrie.

Une fois les deux pièces 202 et 203 assemblées, la réunion des surfaces intérieures 210 et 211 constitue la surface intérieure 122 de la frette 120. Les surfaces 210 et 211 ont chacune un rayon légèrement supérieur au rayon de l'arbre 6, au moins dans la portion de l'arbre 6 autour de laquelle est montée la frette 120. Plus précisément, le rayon de la surface 210, respectivement 211, est égal au rayon de l'arbre 6 augmenté d'un jeu prédéterminé, de préférence égal à 1 mm. Ce jeu est supérieur à la tolérance de 50 centièmes de millimètre sur le rayon de la surface extérieure de l'arbre 6, de manière à garantir la présence d'un intervalle 124 entre la surface intérieure 122 de la frette 120 et l'arbre 6.

Cet intervalle 124 est comblé par une couche de calage 126 permettant la solidarisation du cylindre 200 sur l'arbre 6. La couche 126 est réalisée dans une résine de calage, de préférence une résine époxy, liant le cylindre à l'arbre de manière à reprendre les efforts radiaux, les efforts tangentiels étant repris par les colliers 500 et 600.

Le cylindre 200 est muni de moyens de réglage consistant en une pluralité de vis bouton 260 reçues dans autant de trous taraudés 262, radiaux et traversants, prévus dans les rebords inférieur et supérieur 222 à 225 des pièces 202 et 203. Lors du vissage d'une vis bouton, l'extrémité distale de la vis vient en contact de l'arbre 6, de sorte que, par réaction, la position de l'axe du cylindre 200 est modifiée par rapport à celle de l'axe X₆ de l'arbre 6. Le réglage des différentes vis bouton 260 permet, lors du montage du cylindre 200 sur l'arbre 6, d'équilibrer l'ensemble formé de l'arbre 6 et du cylindre 200 pour éviter tout phénomène de balourd autour de l'axe X₆, tout en maintenant l'intervalle 124 entre l'arbre 6 et le cylindre 200.

Pour la fixation de la bague 300 sur le cylindre 200, les rebords inférieur et supérieur 222 à 225 des pièces 202 et 203 sont munis d'alésages filetés 207, radiaux et borgnes, destinés à coopérer avec les vis radiales de fixation de la bague 300, sur le cylindre 200 comme cela sera décrit ci-dessous.

De plus, les collets 234 et 235 des pièces 202 et 203 comportent une pluralité de canaux 208, axiaux et traversants, répartis annulairement de manière régulière. Ils sont destinés à recevoir les pions coniques de fixation de la bague 300 sur le cylindre 200, comme cela sera décrit ci-dessous.

Enfin, les faces supérieure et inférieure 214 à 217 des pièces 202 et 203 sont munies de trous 209, axiaux et borgnes, pour la réception des pions étagés de solidarisation des colliers supérieur 600 et inférieur 500 sur le cylindre 200, comme cela sera décrit ci-dessous.

La bague 300, pour pouvoir être facilement montée sur les surfaces extérieures 212 et 213 du cylindre 200, est composée d'un premier élément 302 et d'un second élément 303, fixés au cylindre 200 grâce à des moyens de fixation.

L'élément 302 est semi-circulaire. Il comporte une surface intérieure 310, une surface extérieure 312 radiale, des faces transversales inférieure 314 et supérieure 316 planes et qui relient les surfaces 310 et 312 selon un plan transversal, et des première et seconde tranches 318 et 320 planes et qui relient les surfaces 310 et 312 selon un plan axial.

De la même façon, l'élément 303 est défini entre une surface intérieure 311, une surface extérieure 313 radiale, des faces transversales inférieure 315 et supérieure 317, et des première et seconde tranches 319 et 321.

De préférence, les surfaces extérieures 312 et 313 des éléments 302 et 303 comportent des bords inférieur 323 et supérieur 325 et une portion médiane 324. Celle-ci est constituée par une couche en un matériau céramique formant une surépaisseur et qui a été usinée, la bague 300 montée sur le cylindre 300, de sorte que, dans la portion médiane, les rayons des surfaces extérieures 312 et 313 présentent la tolérance requise pour constituer la surface intérieure d'un pallier à eau.

Une fois les deux éléments 302 et 303 fixés sur le cylindre 200 de manière à former la bague 300, la réunion des surfaces extérieures 312 et 313 constitue la surface radiale extérieure 121 de la frette 120. Les dimensions des éléments 302 et 303 sont ajustées de sorte que les surfaces extérieures 312 et 313 soient tangentes l'une à l'autre au niveau de la jonction entre les premier et second éléments 302 et 303 et forment une surface sensiblement continue.

A mi-hauteur, la surface intérieure 310, respectivement 311, de l'élément 302, 303, comporte une rainure annulaire 330, 331, dont les dimensions axiales sont adaptée pour recevoir de manière ajustée le collet 234, 235.

L'élément 302, respectivement 303, comporte une pluralité de canaux 308 axiaux, s'étendant à partir de la face supérieure 316, 317, jusque dans la partie inférieure de l'élément 302, 303, en traversant la rainure 330, 331. En position fixée de la bague 300 sur le cylindre 200, chaque canal 308 de la bague est aligné précisément avec un canal 208 correspondant du collet 235 et 235 du cylindre (figure 3).

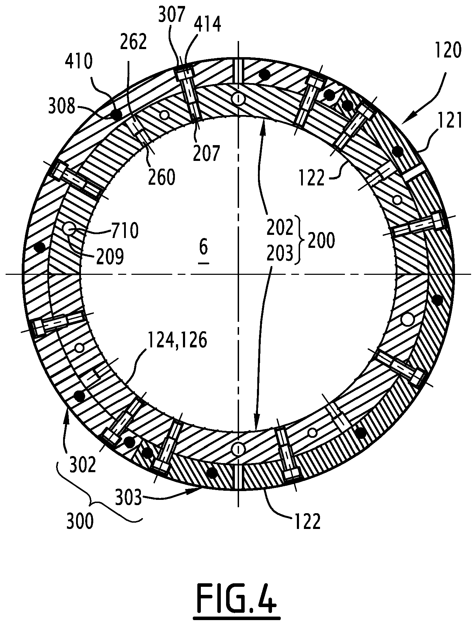

De plus, les bords inférieur et supérieur de la surface extérieure 312, respectivement 313, de l'élément 302, 303, sont munis d'orifices 307, radiaux et traversants, comportant un épaulement interne propre à recevoir une vis à tête de fixation de l'élément 302, 303, sur le cylindre. En position fixée de la bague sur le cylindre, chaque orifice 307 est en alignement précis avec un alésage fileté 207 (figure 4).

Pour la fixation de la bague sur le cylindre, les moyens de fixation comportent des moyens de fixation axiaux et des moyens de fixation radiaux.

Les moyens de fixation axiaux sont constitués par des pions coniques 410, effilés et insérés à travers des passages qui sont respectivement formés par un canal 308 de la bague 300 et un canal 208 correspondant du cylindre 200. Ces pions coniques 410 ont une géométrie adaptée pour assurer une fixation sans jeu, mais sans contrainte de la bague 300 sur le cylindre 200. Ils sont maintenus en position par des vis d'arrêt 412 vissées dans la portion supérieure du canal 308, située à proximité de la face supérieure 316, 317, de la bague.

Les moyens de fixation radiaux sont constitués par des vis radiales 414 à tête hexagonale insérées à travers les orifices 307 de la bague 300 et vissées dans les alésages filetés 207 du cylindre 200. La tête de la vis vient en appui de l'épaulement de l'orifice de manière à plaquer radialement la bague 300 sur le cylindre 200.

Ainsi, en utilisant ces moyens de fixation, le rayon de la surface extérieure 121 de la frette 120 conserve, après montage, la tolérance qui lui a été conférée lors de l'usinage.

Le collier inférieur 500, pour pouvoir être monté facilement autour de l'arbre 6, est composé d'un premier tronçon 502 et d'un second tronçon 503 qui sont assemblés autour de l'arbre 6.

Le tronçon 502 est semi-circulaire et comprend une surface intérieure 510 radiale, une surface extérieure radiale 512, des faces transversales inférieure 514 et supérieure 516 planes et qui relient les surfaces 510 et 512 selon un plan transversal, et des première et seconde tranches 518 et 520 planes et qui relient les surfaces 510 et 512 selon un plan axial.

De la même façon, le tronçon 503 est semi-circulaire et comprend une surface intérieure 511 radiale, une surface radiale extérieur 513, des faces transversales inférieure 515 et supérieure 517 planes, et des première et seconde tranches 519 et 521 planes.

Les surfaces intérieure 510 et 511 ont un rayon égal ou légèrement inférieur au rayon de l'arbre 6, tout au moins dans sa portion autour de laquelle est montée la frette 120.

Chaque tronçon 502, respectivement 503, est pourvu d'un alésage fileté 522 qui débouche orthogonalement sur sa seconde tranche 520, 521.

Par ailleurs, la surface extérieure 512, respectivement 513, de chaque tronçon 502, 503, comporte un logement 526, dont le fond est traversé par un orifice 528, qui débouche orthogonalement sur la première tranche 518, 519, du tronçon 502, 503.

Un goujon 506 est inséré, par approche tangentielle, à l'intérieur du logement 526, puis à travers l'orifice 528, de la première tranche d'un tronçon, afin que sa tige soit vissée dans l'alésage fileté 522 de la seconde tranche de l'autre tronçon. Un vissage adapté permet de serrer le collier sur l'arbre 6 afin d'éviter un mouvement relatif entre la frette et l'arbre. Ce serrage est suffisant pour reprendre les efforts tangentiels et, en particulier, le couple de grippage en cas d'avarie sur le palier.

Le collier inférieur 500 comporte également une pluralité de trous 509, axiaux et traversants, connectant les faces inférieure 514, 515, et supérieure 516, 517, du collier 500. Chaque trou 509 est destiné à venir en alignement précis avec l'un des trous 209 dont est munie la face inférieure 214, 215, du cylindre 200 contre laquelle est appliquée le collier inférieur 500.

Les moyens de solidarisation consistent en une pluralité de pions étagés 710. Chaque pion 710 est logé dans le trou 509 de manière à faire saillie dans le trou 209 correspondant. Les pions 710 sont dimensionnés pour permette la reprise des efforts entre le cylindre 200 et le collier 500.

Une description similaire pourrait être faite pour présenter la structure du collier supérieure 600.

Le procédé de montage de la frette 120 est le suivant.

Dans une étape 1000 préalable d'usinage de la surface extérieure 121 de la frette 120, alors que la bague 300 est montée sur le cylindre 200, la couche en céramique constituant la portion médiane des surfaces extérieures 312 et 313 des éléments 302 et 303 constitutifs de la bague est usinée. La surface extérieure 121 obtenue présente un rayon caractérisé par une tolérance inférieure ou égale à la tolérance requise pour la surface intérieure d'un palier à eau.

Sur site, lors du remplacement d'un palier à huile par un palier à eau, le palier à huile est démonté et la frette 120 décrite ci-dessus est montée directement sur l'arbre 6.

Dans une étape 1100 de montage du collier inférieur 500, les deux tronçons 502 et 503 sont approchés de l'arbre et réunis l'un à l'autre par l'insertion de goujons 506. Puis, les goujons sont vissés pour serrer le collier 500 sur l'arbre.

Dans une étape 1200 de montage du cylindre 200 autour de l'arbre 6, les première et seconde pièces 202 et 203 sont approchées de part et d'autre de l'arbre 6. La première tranche 218, 219 d'une pièce est mise en appui de la seconde tranche 220, 221 de l'autre pièce de sorte que chaque perçage 240 d'une première tranche soit en alignement avec les perçages 240 correspondant d'une seconde tranche. Les deux pièces 202 et 203 sont alors assemblées en plaçant des boulons 242 dans les différents paires de perçages 240 puis en serrant les boulons 242. Cet assemblage est ensuite descendu verticalement pour reposer sur la face supérieure 516 du collier inférieure 500. Le cylindre est tourné autour de l'axe X₆ de manière à ce que les trous borgnes axiaux 209 du cylindre 200 soient en alignement avec les trous 509 du collier inférieur 500. Les pions étagés 710 sont vissés dans les trous 509 pour faire saillie verticalement au-delà de la face transversale supérieure 516 du collier 500 dans les trous borgnes axiaux 209 du cylindre 200.

Dans une étape 1300 de réglage de la position relative du cylindre 200 par rapport à l'axe X₆ de l'arbre 6, un opérateur visse ou dévisse les vis bouton 260 de manière à ce qu'elles viennent en appui de l'arbre 6. A chaque modification de la distance sur laquelle une vis bouton 260 fait saillie radialement par rapport à la surface intérieure 210, 211 du cylindre 200, l'ensemble formé de l'arbre et du cylindre est mis en rotation pour déterminer si cet ensemble est correctement équilibré autour de l'axe X₆ de rotation. A l'issue de cette étape, un intervalle 124 est créé entre le cylindre 200 et la surface de l'arbre 6.

Dans une étape 1 de solidarisation du cylindre sur l'arbre 6, une couche de calage 126 est réalisée entre les surfaces intérieures 210, 211, du cylindre 200 et la surface de l'arbre. Une résine de calage présentant une fluidité adaptée est injectée dans l'intervalle 124. La résine de calage est choisie de manière à ce qu'elle soit « sans retrait » au cours de sa prise. Après polymérisation de la résine, le cylindre 200 est solidaire de l'arbre 6, tout au moins pour ce qui concerne la reprise des contraintes radiales, les contraintes tangentielles étant reprises par les colliers 500 et 600.

Dans une étape 1500 de fixation de la bague 300 sur le cylindre 200, le premier élément 302 est disposé sur le cylindre, de sorte que sa face inférieure 514 vienne dans l'épaulement 232, 233 formé entre le rebord inférieur 222, 223 et la collerette 230, 231 du cylindre, et que le collet 234, 235 du cylindre soit reçu dans la rainure 330. Le premier élément 302 est déplacé radialement pour aligner chaque canal axial 308 avec un canal axial 208 correspondant du collet 234, 235 du cylindre et chaque orifice radial 307 avec un alésage fileté 207 correspondant des rebords inférieur et supérieur du cylindre. Les pions coniques 410 sont insérés dans les passages formés par les canaux axiaux de la bague et du cylindre et bloqués en position par le serrage des vis d'arrêt 412. Les vis radiales 414 sont vissées à travers les orifices 307 dans les alésages 207. La bague est ainsi fixée à l'arbre 6 par l'intermédiaire du cylindre 300.

Une étape 1600 de montage du collier supérieur 600, les deux tronçons 602 et 603 sont approchés de l'arbre et réunis l'un à l'autre par l'insertion de goujons 506. Avant le serrage définitif du collier 600 sur l'arbre 6, le collier 600 est plaqué contre la face transversale supérieure 216 du cylindre 200, et est orienté radialement de manière à ce que les trous axiaux traversants 609 soient en alignement avec les trous borgnes axiaux 209 du cylindre 200. Une fois cette position relative obtenue, les pions étagés 710 sont insérés dans les trous 609 et 209. Les pions 710 sont maintenus en position par la mise en place des vis d'arrêt 712. Ainsi, le collier inférieur 600 est solidaire du cylindre 200.

Après le montage de la frette 120 sur l'arbre 6, on procède au montage de la garniture 110 et aux autres étapes de remontage permettant de remettre la machine en fonctionnement.

La frette selon l'invention et son procédé de montage permettent de garantir que la surface intérieure du palier présente la tolérance requise.

La réalisation d'une couche de calage permet de ne pas avoir à usiner la surface de l'arbre pour lui conférer une tolérance compatible avec la tolérance recherchée sur la surface qui constituera la surface intérieure du palier à eau.

Le cylindre est solidarisé à l'arbre sans serrage et par conséquent sans déformation de sa géométrie, tout au moins de la géométrie de ses surfaces extérieures sur lesquelles sont positionnés et fixés les éléments constitutifs de la bague.

De plus, le fait que la frette soit composée d'un cylindre et d'une bague, permet de solidariser la bague sur l'arbre, en utilisant des moyens de fixation axiaux et éventuellement radiaux. Ainsi, la géométrie de la surface extérieure de la bague n'est pas déformée une fois fixée au cylindre, ce qui permet de conserver la tolérance obtenue lors de l'usinage.

## Revendications

1. Frette (120) destinée à être montée sur un arbre (6) d'une machine tournante pour former une surface intérieure (122) d'un palier hydrostatique ou hydrodynamique, comportant :
- un cylindre (200) qui, pour pouvoir être monté autour de l'arbre, est composé de plusieurs pièces (202, 203) assemblées les unes aux autres par des moyens d'assemblage propres à réaliser un assemblage sans déformation d'une surface extérieure (212, 213) du cylindre ;
- une bague (300) dont une surface extérieure (312, 313) constitue la surface intérieure du palier, et qui, pour pouvoir être fixée à la paroi extérieure (212, 213) du cylindre (200) est composée de plusieurs éléments (302, 303) fixés au cylindre par des moyens de fixation propres à conserver une tolérance d'usinage de ladite surface extérieure (312, 313) de la bague (300),
et dans laquelle le cylindre (200) est muni de moyens de réglage, de préférence consistant en une pluralité de vis bouton (260) disposées radialement et propres à venir en appui sur l'arbre (6), pour permettre un équilibrage de l'ensemble formé de l'arbre et du cylindre tout en maintenant un intervalle (124) entre l'arbre et le cylindre.

2. Frette (120) selon l'une ou quelconque des revendications précédentes, dans laquelle le cylindre (200) est composé d'une première pièce (202) et d'une seconde pièce (203), chaque pièce étant semi-circulaire.

3. Frette (120) selon l'une ou quelconque des revendications précédentes, dans laquelle une surface extérieure (212, 213) du cylindre (300) comporte un collet (234, 235) annulaire s'étendant radialement vers l'extérieur, et la bague (300) comporte une rainure (330, 331) annulaire constituant un logement ajusté au collet pour la réception de celui-ci lors de la fixation de la bague sur le cylindre.

4. Frette (120) selon la revendication 3, dans laquelle le collet (234, 235) comporte une pluralité de canaux axiaux (208) traversants et la bague (300) comporte une pluralité de canaux axiaux (308) connectant une face transversale (214, 215) et la rainure (330, 331) de la bague, lesdits moyens de fixation comportant une pluralité de pions coniques (410), chaque pion étant adapté pour être inséré dans un passage formé de l'alignement d'un canal axial (308) de la bague (300) avec une canal axial (209) du collet du cylindre (200).

5. Frette (120) selon l'une ou quelconque des revendications précédentes, dans laquelle la surface extérieure (312, 313) de la bague (300) est constituée, au moins partiellement selon la direction axiale, par une couche en un matériau céramique.

6. Frette (120) selon l'une ou quelconque des revendications précédentes, dans laquelle la bague (300) est composée d'un premier élément (302) et d'un second élément (303), chaque élément étant semi-circulaire.

7. Frette (120) selon l'une ou quelconque des revendications précédentes, comportant un collier (500, 600) monté serré sur l'arbre (6) et solidarisé à une face transversale du cylindre (214, 215 ; 216, 217) par des moyens de solidarisation, de préférence constitués par une pluralité de pions étagés (710).

8. Frette (120) selon l'une ou quelconque des revendications précédentes, dans laquelle les moyens de fixation comportent, en outre, une pluralité de vis radiales (414), chaque vis étant insérée dans un orifice (307) orienté radialement ménagé sur un bord de la bague (300) et vissée dans un alésage fileté (207) orienté radialement et ménagé dans le cylindre (200).

9. Frette (120) selon l'une quelconque des revendications précédentes, dans laquelle ladite tolérance d'usinage de la surface extérieure (312, 313) de la bague (300) est de 5 centièmes de millimètre, de préférence de 4 centièmes de millimètre, de préférence encore de 3 centièmes de millimètre.

10. Ensemble constitué par un arbre (6) et une frette (120), **caractérisé en ce que** ladite frette est une frette conforme à l'une quelconque des revendications 1 à 9, ladite frette étant solidarisée à l'arbre par une couche de calage (126) réalisée en un matériau de calage adapté et située dans un intervalle (124) entre l'arbre et le cylindre.

11. Ensemble selon la revendication 10, dans lequel ledit matériau de calage est une résine fluide et sans retrait, de préférence une résine époxy.

12. Procédé de montage d'une frette (120) conforme à l'une ou quelconque des revendications 1 à 9 sur un arbre (6) d'une machine tournante pour former une surface intérieure (121) d'un palier hydrostatique ou hydrodynamique, **caractérisé en ce qu'**il comporte les étapes consistant à :
- monter (1200) le cylindre (200) de la frette autour de l'arbre en assemblant les différentes pièces (202, 203) constitutives du cylindre ;
- solidariser (1400) le cylindre (200) à l'arbre (6) en réalisant une couche de calage entre le cylindre et l'arbre ;
- monter (1500) la bague (300) sur le cylindre (300) en fixant les différents éléments (302, 303) constitutifs de la bague sur le cylindre.

13. Procédé selon la revendication 12, dans lequel l'étape de montage du cylindre est suivie d'une étape (1300) de réglage consistant à équilibrer l'ensemble formé de l'arbre (6) et du cylindre (200).

14. Procédé selon la revendication 12 ou selon la revendication 13, dans lequel l'étape (1400) de solidarisation consiste à injecter une résine fluide et sans retrait dans un intervalle (124) entre le cylindre (200) et l'arbre (6) et d'attendre le séchage de la résine.

## Patentansprüche

1. Spannbuchse (120), der dazu bestimmt ist, auf einer Welle (6) einer Drehmaschine montiert zu werden, um eine Innenfläche (122) eines hydrostatischen oder hydrodynamischen Lagers zu bilden, umfassend:
- einen Zylinder (200), der, um um die Welle montiert werden zu können, aus mehreren Teilen (202, 203) besteht, die miteinander durch Montagemittel zusammengefügt sind, die geeignet sind, eine Montage ohne Verformung einer Außenfläche (212, 213) des Zylinders durchzuführen;
- einen Ring (300), dessen Außenfläche (312, 313) die Innenfläche des Lagers darstellt, und der, um an der Außenwand (212, 213) des Zylinders (200) montiert werden zu können, aus mehreren Elementen (302, 303) besteht, die am Zylinder durch Befestigungsmittel befestigt sind, die geeignet sind, eine Toleranz zur Bearbeitung der Außenfläche (312, 313) des Ringes (300) beizubehalten,
und bei der der Zylinder (200) mit Regelmitteln versehen ist, die vorzugsweise in einer Vielzahl von Halbrundschrauben (260) bestehen, die radial angeordnet und geeignet sind, an der Welle (6) zur Anlage zu gelangen, um einen Ausgleich der von der Welle und dem Zylinder gebildeten Einheit unter Beibehaltung eines Zwischenraums (124) zwischen der Welle und dem Zylinder zu ermöglichen.

2. Spannbuchse (120) nach einem der vorhergehenden Ansprüche, bei der der Zylinder (200) aus einem ersten Teil (202) und einem zweiten Teil (203) besteht, wobei jeder Teil halbkreisförmig ist.

3. Spannbuchse (120) nach einem der vorhergehenden Ansprüche, bei der eine Außenfläche (212, 213) des Zylinders (300) einen ringförmigen Kragen (234, 235) umfasst, der sich radial nach außen erstreckt, und der Ring (300) eine Ringnut (330, 331) umfasst, die eine an den Kragen angepasste Lagerung für die Aufnahme desselben bei der Befestigung des Ringes am Zylinder darstellt.

4. Spannbuchse (120) nach Anspruch 3, bei der der Kragen (234, 235) eine Vielzahl von durchgehenden Axialkanälen (208) umfasst, und der Ring (300) eine Vielzahl von Axialkanälen (308) umfasst, die eine Querfläche (214, 215) und die Nut (330, 331) des Ringes verbinden, wobei die Befestigungsmittel eine Vielzahl von konischen Stiften (410) umfassen, wobei jeder Stift dazu vorgesehen ist, in einen Durchgang eingesetzt zu werden, der von der Ausrichtung eines Axialkanals (308) des Ringes (300) mit einem Axialkanal (209) des Kragens des Zylinders (200) gebildet ist.

5. Spannbuchse (120) nach einem der vorhergehenden Ansprüche, bei der die Außenfläche (312, 313) des Ringes (300) zumindest teilweise in Axialrichtung von einer Schicht aus Keramikmaterial gebildet ist.

6. Spannring (120) nach einem der vorhergehenden Ansprüche, bei dem der Ring (300) aus einem ersten Element (302) und einem zweiten Element (303) gebildet ist, wobei jedes Element halbkreisförmig ist.

7. Spannring (120) nach einem der vorhergehenden Ansprüche, umfassend eine Schelle (500, 600), die fest auf der Welle (6) montiert und mit einer Querfläche des Zylinders (214, 215; 216, 217) durch Verbindungsmittel, die vorzugsweise von einer Vielzahl von gestuften Stiften (710) gebildet sind, verbunden ist.

8. Spannring (120) nach einem der vorhergehenden Ansprüche, bei dem die Befestigungsmittel ferner eine Vielzahl von Radialschrauben (414) umfassen, wobei jede Schraube in eine radial ausgerichtete Öffnung (307), die an einem Rand des Ringes (300) ausgenommen ist, eingesetzt und in eine Gewindeöffnung (207) geschraubt ist, die radial ausgerichtet und in dem Zylinder (200) ausgenommen ist.

9. Spannring (120) nach einem der vorhergehenden Ansprüche, bei dem die Bearbeitungstoleranz der Außenfläche (312, 313) des Ringes (300) 5 Hundertstel Millimeter, vorzugsweise 4 Hundertstel Millimeter, noch bevorzugter 3 Hundertstel Millimeter beträgt.

10. Einheit, die von einer Welle (6) und einem Spannring (120) gebildet ist, **dadurch gekennzeichnet, dass** der Spannring ein Spannring nach einem der Ansprüche 1 bis 9 ist, wobei der Spannring mit der Welle durch eine Befestigungsschicht (126) verbunden ist, die aus einem entsprechenden Befestigungsmaterial hergestellt ist und sich in einem Zwischenraum (124) zwischen der Welle und dem Zylinder befindet.

11. Einheit nach Anspruch 10, bei der das Befestigungsmaterial ein flüssiges Harz ohne Schrumpfung, vorzugsweise ein Epoxy-Harz, ist.

12. Verfahren zur Montage eines Spannrings (120) nach einem der Ansprüche 1 bis 9 auf einer Welle (6) einer Drehmaschine, um eine Innenfläche (121) eines hydrostatischen oder hydrodynamischen Lagers zu bilden, **dadurch gekennzeichnet, dass** es die folgenden Schritte umfasst, darin bestehend:
- den Zylinder (200) des Spannrings um die Welle zu montieren (1200), wobei die verschiedenen Bestandteile (202, 203) des Zylinders zusammengefügt werden;
- den Zylinder (200) mit der Welle (6) zu verbinden (1400), wobei eine Befestigungsschicht zwischen dem Zylinder und der Welle hergestellt wird;
- den Ring (300) auf dem Zylinder (300) zu montieren (1500), wobei die verschiedenen Elemente (302, 303), aus denen der Ring besteht, auf dem Zylinder befestigt werden.

13. Verfahren nach Anspruch 12, bei auf den Schritt der Montage des Zylinders ein Einstellungsschritt (1300) folgt, der darin besteht, die von der Welle (6) und dem Zylinder (200) gebildete Einheit auszugleichen.

14. Verfahren nach Anspruch 12 oder nach Anspruch 13, bei dem der Verbindungsschritt (1400) darin besteht, ein flüssiges und nicht schrumpfendes Harz in einen Zwischenraum (124) zwischen dem Zylinder (200) und der Welle (6) einzuspritzen und auf das Trocknen des Harzes zu warten.

## Claims

1. Hoop (120) intended to be mounted on a shaft (6) of a rotating machine to form an internal surface (122) of a hydrostatic or hydrodynamic bearing, comprising:
- a cylinder (200) which, in order to be able to be mounted about the shaft, consists of a plurality of parts (202, 203) assembled with one another by assembly means suitable for producing a strain-free assembly of an external surface (212, 213) of the cylinder;
- a ring (300) of which an external surface (312, 313) forms the internal surface of the bearing, and which, in order to be able to be attached to the external wall (212, 213) of the cylinder (200), consists of a plurality of elements (302, 303) attached to the cylinder by attachment means suitable for retaining a machining tolerance of said external surface (312, 313) of the ring (300),
and wherein the cylinder (200) is equipped with setting means, preferably consisting of a plurality of button screws (260) arranged radially and suitable for bearing on the shaft (6), to enable balancing of the assembly formed from the shaft and the cylinder while maintaining a gap (124) between the shaft and the cylinder.

2. Hoop (120) according to one or any of the preceding claims, wherein the cylinder (200) consists of a first part (202) and of a second part (203), each part being semicircular.

3. Hoop (120) according to one or any of the preceding claims, wherein an external surface (212, 213) of the cylinder (300) comprises an annular collar (234, 235) extending radially outwards, and the ring (300) comprises an annular groove (330, 331) forming a housing adjusted to the collar for receiving same when attaching the ring to the cylinder.

4. Hoop (120) according to claim 3, wherein the collar (234, 235) comprises a plurality of through axial channels (208) and the ring (300) comprises a plurality of axial channels (308) connecting a transverse face (214, 215) and the groove (330, 331) of the ring, said attachment means comprising a plurality of conical pieces (410), each piece being suitable for being inserted into a passage formed from the alignment of an axial channel (308) of the ring (300) with an axial channel (209) of the collar of the cylinder (200).

5. Hoop (120) according to one or any of the preceding claims, wherein the external surface (312, 313) of the ring (300) is formed, at least partially in the axial direction, by a layer of a ceramic material.

6. Hoop (120) according to one or any of the preceding claims, wherein the ring (300) consists of a first element (302) and of a second element (303), each element being semicircular.

7. Hoop (120) according to one or any of the preceding claims, comprising a clamp (500, 600) tightly mounted on the shaft (6) and secured to a transverse face of the cylinder (214, 215; 216, 217) by securing means, preferably consisting of a plurality of staged pieces (710).

8. Hoop (120) according to one or any of the preceding claims, wherein the attachment means further comprise a plurality of radial screws (414), each screw being inserted into a radially oriented orifice (307) formed on an edge of the ring (300) and screwed into a radially oriented threaded bore (207) formed in the cylinder (200).

9. Hoop (120) according to any one of the preceding claims, wherein said machining tolerance of the external surface (312, 313) of the ring (300) is 5 hundredths of a millimetre, preferably 4 hundredths of a millimetre, more preferably 3 hundredths of a millimetre.

10. Assembly consisting of a shaft (6) and a hoop (120), **characterised in that** said hoop is a hoop according to any one of claims 1 to 9, said hoop being secured to the shaft by a pitch layer (126) made of a suitable pitch material and situated in a gap (124) between the shaft and the cylinder.

11. Assembly according to claim 10, wherein said pitch material is a non-shrink fluid resin, preferably an epoxy resin.

12. Method for mounting a hoop (120) according to one or any of claims 1 to 9 on a shaft (6) of a rotating machine to form an internal surface (121) of a hydrostatic or hydrodynamic bearing, **characterised in that** it comprises steps consisting of:
- mounting (1200) the cylinder (200) of the hoop about the shaft by assembling the various constituent parts (202, 203) of the cylinder;
- securing (1400) the cylinder (200) to the shaft (6) by producing a pitch layer between the cylinder and the shaft;
- mounting (1500) the ring (300) on the cylinder (300) by attaching the various constituent elements (302, 303) of the ring on the cylinder.

13. Method according to claim 12, wherein the step for mounting the cylinder is followed by a setting step (1300) consisting of balancing the assembly formed by the shaft (6) and the cylinder (200).

14. Method according to claim 12 or according to claim 13, wherein the securing step (1400) consists of injecting a non-shrink fluid resin in a gap (124) between the cylinder (200) and the shaft (6) and waiting for the resin to dry.
